# DEMANDE DE BREVET EUROPEEN

(11) **EP 3 159 599 A1**
(43) Date de publication de la demande: **26.04.2017**
(21) Numéro de dépôt: 16195007.6
(22) Date de dépôt: 21.10.2016
(51) Int. Cl.: F21S 8/12

(54) **DISPOSITIF LUMINEUX A GUIDES OPTIQUES**

(30) Priorité: 23.10.2015 FR 1560145
(71) Demandeur: VALEO VISION, 93012 Bobigny Cedex (FR)
(72) Inventeur: BEEV, Kostadin, 77184 EMERAINVILLE (FR); GODBILLON, Vincent, 75011 PARIS (FR); PUENTE, Jean-Claude, 93190 LIVRY GARGAN (FR)

(57) **Abrégé**

Un dispositif lumineux (1) comporte une série de guides optiques (6) aptes à permettre chacun le guidage de rayons lumineux entre une face d'entrée (20) arrangée à une extrémité proximale (16) du guide optique, et une face de sortie (22).

Le dispositif est formé d'au moins deux sous-ensembles (2, 4) réalisés distinctement et comportant chacun au moins une partie de ladite série de guides optiques et des premiers éléments structurels (14) de tenue des guides en position reliant entre eux les guides optiques successifs dudit sous-ensemble, les deux sous-ensembles étant aptes à être assemblés pour former ledit dispositif par coopération desdits premiers éléments structurels.

Les extrémités distales d'au moins deux guides optiques successifs de la série sont liées par une pièce de matière souple (5) translucide ou transparente.

## Description

L'invention a trait au domaine de l'éclairage et/ou de la signalisation, notamment pour véhicules automobiles. Elle concerne plus particulièrement un dispositif lumineux à guides optiques apte à être implanté dans un module lumineux de projecteur.

Un véhicule automobile est équipé de projecteurs, ou phares, destinés à illuminer la route devant le véhicule, la nuit ou en cas de luminosité réduite, par un faisceau lumineux global. Ces projecteurs, un projecteur gauche et un projecteur droit, comportent un ou plusieurs modules lumineux adaptés à générer et diriger un faisceau lumineux intermédiaire dont l'addition forme ledit faisceau lumineux global.

Ces projecteurs peuvent généralement être utilisés selon deux modes d'éclairage : un premier mode " feux de route " et un deuxième mode " feux de croisement". Le mode " feux de route " permet d'éclairer fortement la route loin devant le véhicule. Le mode " feux de croisement " procure un éclairage plus limité de la route, mais offrant néanmoins une bonne visibilité, sans éblouir les autres usagers de la route. Les deux modes d'éclairage, " feux de route " et " feux de croisement ", sont complémentaires, et l'on passe de l'un à l'autre en fonction des conditions de circulation. La commutation d'un mode à l'autre peut se faire manuellement, le conducteur décidant du moment de cette commutation, ou elle peut se faire automatiquement, en fonction de la détection par des moyens appropriés de conditions requises à un tel changement de mode d'éclairage.

Il existe désormais un besoin, dans le domaine de l'automobile, de pouvoir illuminer la route devant soi en "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB (Adaptive Driving Beam en anglais) ou encore " faisceau sélectif ". Une telle fonction ADB consiste à d'une part détecter de façon automatique un usager de la route susceptible d'être ébloui par un faisceau d'éclairage émis en mode feux de route par un projecteur, et à d'autre part modifier le contour de ce faisceau d'éclairage de manière à créer une zone d'ombre à l'endroit où se trouve l'usager détecté. Les avantages de la fonction ADB sont multiples : confort d'utilisation, meilleure visibilité par rapport à un éclairage en mode feux de croisement, meilleure fiabilité pour le changement de mode, risque d'éblouissement fortement réduit, conduite plus sûre.

On connaît des modules lumineux pour la réalisation de faisceau sélectif dans lesquels des guides optiques sont disposés côte à côte, chacun étant illuminé par une source de lumière respective de sorte que le faisceau lumineux en sortie du module est découpé en segments contigus que l'on peut éteindre ou allumer en fonction d'instructions de détection d'un véhicule à proximité.

La forme et la disposition des guides les uns par rapport aux autres dans un module d'un projecteur doivent être très précises pour d'une part pouvoir réaliser un faisceau intermédiaire en sortie de module qui soit homogène et lissée lorsque tous les segments sont allumés, et pour d'autre part pouvoir présenter un faisceau intermédiaire complémentaire du faisceau intermédiaire réalisé en sortie de l'autre projecteur.

L'invention s'inscrit dans ce contexte et elle vise à proposer un dispositif lumineux qui permet la mise en oeuvre simple et efficace d'une fonction d'éclairage matriciel et dont les fonctions d'éclairage et/ou de signalisation sont au moins aussi performantes que précédemment, et ce à moindre coût, notamment sans nécessiter des conditions de fabrication préjudiciables à une fabrication en grande série. Dans ce but, l'invention a pour objet un dispositif lumineux comportant une série de guides optiques aptes à permettre chacun le guidage de rayons lumineux entre une face d'entrée arrangée à une extrémité proximale du guide optique, et une face de sortie, dans lequel deux sous-ensembles réalisés distinctement forment par assemblage le dispositif lumineux. Chaque sous-ensemble comporte au moins une partie de ladite série de guides optiques et des premiers éléments structurels de tenue des guides en position reliant entre eux les guides optiques successifs dudit sous-ensemble, notamment au niveau des extrémités proximales des guides optiques, les deux sous-ensembles étant aptes à être assemblés pour former ledit dispositif par coopération desdits premiers éléments structurels, notamment au niveau des faces d'entrée. Par ailleurs, les extrémités distales d'au moins deux guides optiques successifs de la série sont liées par une pièce de matière souple translucide ou transparente.

Ainsi, on peut compenser des défauts de l'ensemble obtenu par assemblage des deux sous-ensembles, notamment quant à la position relative des extrémités distales des guides, par la présence de cette matière souple, qui bouche les trous laissés entre les guides lors de l'assemblage et qui permet le passage de la lumière vers une face de sortie par sa transparence.

Selon une caractéristique particulière de l'invention, les guides optiques sont disposés de sorte que l'extrémité distale respective, porteuse de la face de sortie, de deux guides voisins sont au contact l'une de l'autre et de sorte que l'extrémité proximale respective, porteuse de la face d'entrée, de ces deux guides voisins sont écartés transversalement l'une de l'autre. On comprend que d'une part les extrémités proximales des guides doivent être espacées pour que la lumière émise par une source de lumière vers un guide optique ne pénètre pas dans le guide voisin, et que d'autre part les extrémités distales des guides doivent être collées successivement les unes aux autres pour éviter les zones sombres entre les segments de lumière formés par les guides et projetés vers le dispositif de projection en sortie du module.

La présence de la pièce de matière souple translucide ou transparente en recouvrement des extrémités distales des guides permet de compenser les éventuels écartements entre deux guides et la formation de ces zones sombres.

Dans cette forme en éventail, les extrémités distales des guides optiques voisins peuvent être plaquées l'une contre l'autre sur une portion de recouvrement déterminée, qui peut notamment prendre une valeur sensiblement égale à 1mm. Et l'écartement transversal des extrémités proximales des deux guides optiques voisins peut être inférieur ou égal à 5 mm.

Selon une première série de caractéristiques, prises seules ou en combinaison, on peut prévoir que :
- l'extrémité distale de chacun des guides optiques est recouverte par la pièce de matière souple qui forme une bande continue s'étendant en aval de toute la série des guides ;
- la pièce de matière souple est déformée par pression des sous-ensembles assemblés les uns avec les autres ;
- la pièce de matière souple est surmoulée sur les extrémités distales des guides optiques ;
- la pièce de matière souple présente une face continue qui s'étend à l'opposé des guides optiques et qui forme une face de sortie commune aux guides du dispositif lumineux ;
- un moyen de maintien en position de la pièce de matière souple est relié mécaniquement à au moins une partie des premiers éléments structurels ;
- la pièce de matière souple est disposée entre au moins deux extrémités distales de deux guides optiques successifs du dispositif.

Selon une autre série de caractéristiques, prises seules ou en combinaison, relatives à une structure particulière dans laquelle au moins un premier sous-ensemble comporte en outre un deuxième élément structurel, distinct du premier élément structurel et apte à relier les extrémités distales des guides optiques de ce premier sous-ensemble, on peut prévoir que :
- le deuxième élément structurel consiste en une bande réalisée en matière translucide ou transparente et disposée transversalement, en aval desdites extrémités distales sur le trajet des rayons lumineux, ladite bande et deux guides successifs de ce premier sous-ensemble définissant un logement de réception d'une extrémité distale d'un guide d'un deuxième sous-ensemble de sorte que la face de sortie de ce guide vienne en appui de ladite bande ;
- la pièce de matière souple est disposée dans le logement de réception ;
- la pièce de matière souple est surmoulée sur l'extrémité distale du guide optique dudit deuxième sous-ensemble ;
- la pièce de matière souple est surmoulée sur le deuxième élément structurel et sur la face des guides successifs du premier sous-ensemble définissant ledit logement de réception.

Selon des caractéristiques propres à la constitution de la pièce de matière souple, on pourra prévoir que :
Selon d'autres caractéristiques de l'invention, prises seules ou en combinaison, chaque guide optique comporte au moins une face inférieure et une face supérieure qui s'étendent entre les extrémités de la face d'entrée et de la face de sortie, la face inférieure étant une face de réflexion. Les guides optiques sont en outre définis par des faces latérales s'étendant pareillement entre les extrémités de la face d'entrée et de la face de sortie. Cette face inférieure peut présenter une forme sensiblement elliptique dont un premier foyer coïncide avec l'emplacement d'une source émettrice de rayons lumineux disposée à proximité, notamment au niveau, de la face d'entrée du guide et dont un deuxième foyer est situé au niveau de la face de sortie. Le deuxième foyer de la face inférieure peut être situé au niveau de l'arête jointive de la face supérieure et de la face de sortie.

On prévoit de réaliser les sous-ensembles ou tout au moins les guides optiques des sous-ensembles, voire les sous-ensembles, en un matériau permettant la propagation des rayons lumineux par réflexion interne totale depuis la face d'entrée vers la face de sortie, par exemple du polycarbonate (PC) ou du polyméthacrylate de méthyle (PMMA) ou du silicone ou du verre. Le cas échéant, les guides optiques peuvent être tous réalisés dans un même matériau.

Avantageusement, la pièce de matière souple translucide ou transparente est réalisée dans un matériau présentant un indice de réfraction sensiblement voisin, voire identique de celui du matériau des guides optiques.

Et on prévoit de réaliser la pièce de matière souple dans un matériau présentant une souplesse plus importante que la souplesse du matériau utilisé pour réaliser les guides optiques. Notamment, la matière souple peut être un élastomère silicone liquide.

L'invention concerne également un module lumineux pour un projecteur de véhicule automobile dans lequel on prévoit au moins des premiers moyens comportant un dispositif lumineux tel qu'il vient d'être décrit précédemment, pour participer à la réalisation d'une pluralité de segments lumineux activables sélectivement.

Dans une application particulière du dispositif lumineux de l'invention, le module lumineux peut comporter des deuxièmes moyens, agencés pour réaliser un premier faisceau à coupure dirigé vers un dispositif de projection agencé en sortie du module, les segments lumineux réalisés par les premiers moyens formant un deuxième faisceau dirigé vers le dispositif de projection et complémentaire au faisceau à coupure, lorsqu'ils sont activés simultanément.

Notamment, les deuxièmes moyens peuvent consister en un premier sous-module agencé pour réaliser un faisceau de type code, notamment présentant une portion de coupure oblique. Et le dispositif de projection peut être une lentille mais pourra prendre d'autres formes connues par ailleurs.

Il est notable que les deuxièmes moyens comportent au moins un moyen optique, notamment du type réflecteur ou collimateur, au moins une source lumineuse disposée au niveau d'un foyer du moyen optique et un cache, pourvu ou non d'un revêtement réfléchissant, disposé sur le trajet des rayons lumineux issus de la source lumineuse et déviés par le moyen optique, pour la réalisation du faisceau à coupure, et il est notable que les guides optiques du dispositif lumineux sont disposés de façon à être en contact avec le cache. Les guides optiques peuvent être orientés de façon à être en contact avec le cache uniquement au voisinage de la zone focale du dispositif de projection. Selon l'invention, on peut prévoir que le contact avec le cache soit réalisé au niveau de la pièce de matière souple.

L'invention concerne également un système d'éclairage comprenant au moins un module lumineux tel que décrit précédemment et des moyens de commande pour allumer, éteindre ou modifier la puissance lumineuse émise par les premiers moyens et les deuxièmes moyens du module lumineux.

On pourra également prévoir un module de détection sur la route d'un corps à ne pas éblouir. Ce module de détection peut consister par exemple en une caméra tournée vers la scène de route s'étendant devant le véhicule, et en des moyens de traitement d'image associés, qui permettent l'élaboration d'un information de détection que le module de détection est apte à envoyer aux moyens de commande pour l'allumage, l'extinction ou la modification de la puissance lumineuse émise par chaque source de lumière en fonction de cette information de détection.

Il est avantageux de prévoir un système d'éclairage dans lequel au moins un module selon l'invention est disposé dans un projecteur gauche, et au moins un autre module selon l'invention est disposé dans un projecteur droit. Le module disposé dans le projecteur gauche comporte un dispositif lumineux avec un premier sous-ensemble de guides optiques d'un premier type, et un deuxième sous-ensemble de guides optiques d'un deuxième type, tandis que le module disposé dans le projecteur droit comporte un deuxième dispositif lumineux avec un premier sous-ensemble de guides optiques d'un troisième type et un deuxième sous-ensemble de guides optiques d'un deuxième type, semblable au deuxième sous-ensemble du premier dispositif lumineux.

Les modules peuvent être agencés les uns par rapport aux autres que ce soit au sein d'un même projecteur, ou entre les deux projecteurs, de manière à ce qu'au moins une partie de faisceau, par exemple un segment, réalisée par l'un des modules recouvre au moins une partie de faisceau, dans l'exemple un segment, réalisée par un autre des modules.

D'autres caractéristiques et avantages de la présente invention apparaitront plus clairement à l'aide de la description et des dessins parmi lesquels :
- les figures 1 et 2 sont des vues en perspective de deux sous-ensembles constitutifs d'un dispositif lumineux selon un premier mode de réalisation de l'invention ;
- la figure 3 est une vue en perspective des deux sous-ensembles assemblés et d'une pièce de matière souple apte à venir en recouvrement des extrémités distales des guides optiques de ces deux sous-ensembles ;
- la figure 4 est une vue de face du dispositif lumineux selon un premier mode de réalisation, lorsque les composants de la figure 3 sont assemblés ;
- la figure 5 est une vue d'ensemble d'un module lumineux pour un projecteur de véhicule automobile, dans lequel on a utilisé le dispositif lumineux de la figure 1 ;
- la figure 6 est une vue de face de deux sous-ensembles formant un dispositif lumineux selon un deuxième mode de réalisation ;
- et les figures 7 et 8 sont des illustrations de variantes d'implantation d'une pièce de matière souple dans le dispositif lumineux de la figure 6.

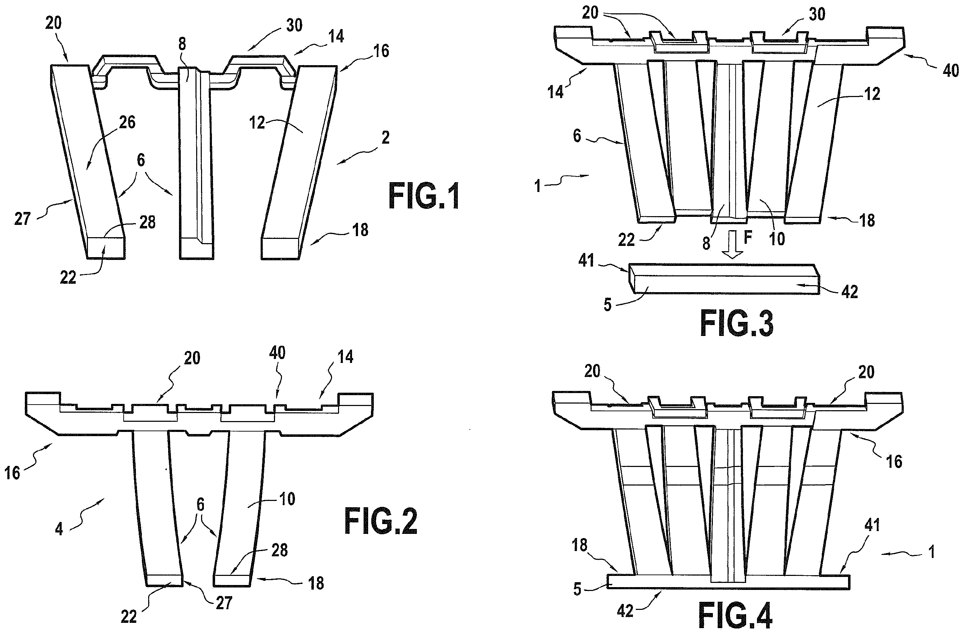

Le dispositif lumineux 1 selon l'invention est formé de deux sous-ensembles distincts 2 et 4 que l'on vient assembler l'un avec l'autre et d'au moins une pièce de matière souple 5 apte à lier entre eux lesdits sous-ensembles. On va maintenant décrire un premier mode de réalisation, en se référant aux figures 1 à 4, dans lequel la pièce de matière souple 5 vient en recouvrement d'extrémités de ces deux sous-ensembles 2,4.

Le dispositif assemblé, visible sur la figure 4, comporte ici cinq guides optiques 6 parmi lesquels on distinguera un guide central 8, deux guides intermédiaires 10 et deux guides latéraux 12 agencés transversalement en série de sorte que l'on retrouve successivement un guide latéral, un guide intermédiaire, le guide central, un guide intermédiaire et un guide latéral. Le dispositif comporte également des premiers éléments structurels 14 de tenue des guides en position, qui relient entre elles les extrémités proximales 16 correspondantes des guides.

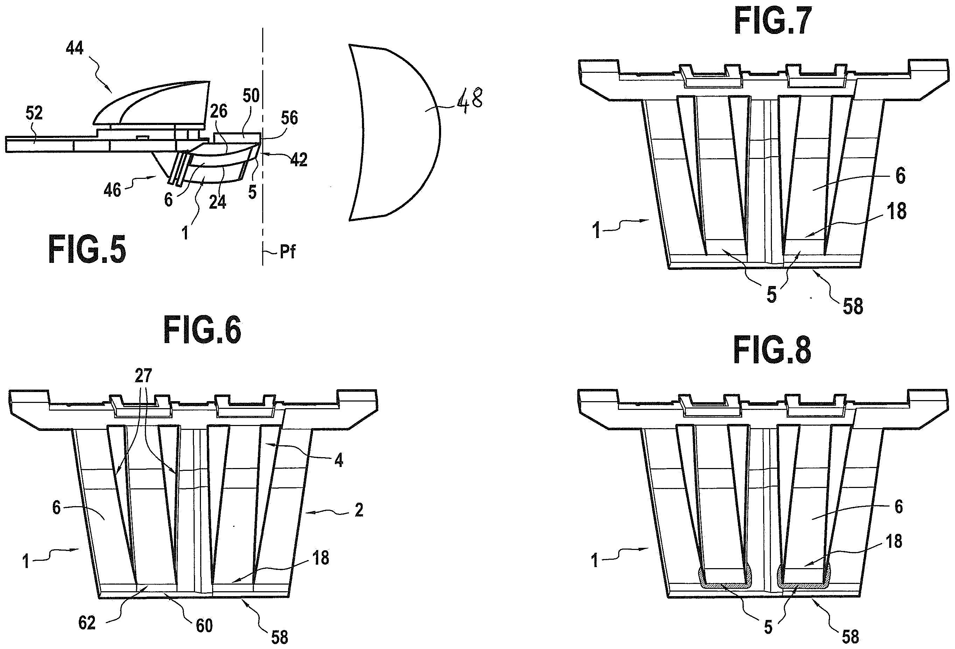

Chaque guide optique 6 est adapté à guider par réflexion interne totale des rayons lumineux émis par une source de lumière associée au guide pour les diriger en sortie du guide vers un dispositif de projection de type lentille. A cet effet, chaque guide présente une face d'entrée 20 de la lumière agencée à l'extrémité proximale 16 du guide optique et en regard de laquelle est disposée ladite source de lumière, par exemple une source de lumière à semi-conducteur, notamment une puce d'une diode électroluminescente, et une face de sortie 22 de la lumière agencée à l'extrémité distale 18, ainsi qu'une face inférieure 24, dite de réflexion et visible uniquement sur la figure 5, et une face supérieure 26, dite avant, qui s'étendent entre les extrémités de la face d'entrée et de la face de sortie, de même que des faces latérales 27.

On comprend que pour permettre le guidage des rayons lumineux à l'intérieur des guides, chaque sous-ensemble est réalisé dans un matériau permettant le guidage des rayons lumineux par réflexion interne totale depuis la face d'entrée vers la face de sortie. Un tel matériau pourra par exemple consister en du polycarbonate (PC), du polyméthacrylate de méthyle (PMMA), du silicone ou du verre.

On définit à titre arbitraire la hauteur d'un guide optique comme la dimension entre la face de réflexion 24 et la face avant 26, selon une direction verticale, tandis que la longueur du guide est définie comme la dimension entre la face d'entrée et la face de sortie selon une direction longitudinale, et que la largeur du guide correspond à la dimension dans la direction transversale dans laquelle les guides sont en série.

La face de réflexion 24 présente une forme sensiblement elliptique dont un premier foyer coïncide avec l'emplacement de la source de lumière et dont un deuxième foyer, dit de focalisation, est situé au niveau de l'arête jointive 28 de la face avant 26 et de la face de sortie 22, de sorte que les rayons lumineux réfléchis dans chaque guide optique sortent du guide principalement au sommet de la face de sortie 22.

Le dispositif lumineux 1 présente un agencement sensiblement symétrique de part et d'autre du guide central 8, à l'exception faite de la hauteur de chaque partie symétrique. La hauteur des guides optiques 6 est différente selon que les guides sont disposés d'un côté ou de l'autre du guide central 8, et le guide central présente une face de sortie 22 dont l'arête jointive 28 avec la face avant 26 est rognée pour présenter un ressaut, vertical ou oblique, de manière à former sensiblement une marche d'escalier. Tel qu'illustré sur les figures, les guides disposés à droite du guide central 8, lorsque l'on regarde le dispositif en face des faces de sortie 22 des guides, présentent une hauteur moindre de celle des guides disposés à gauche du guide central. En d'autres termes, le guide central 8 présente une face de sortie 22 agencée pour présenter un bord latéral, dont la hauteur correspond à celle de l'extrémité distale 18 des guides disposés d'un côté du guide central, un autre bord latéral, dont la hauteur correspond cette fois à celle de l'extrémité distale 18 des guides disposés de l'autre côté du guide central, et un bord supérieur reliant les deux bords latéraux et présentant ledit ressaut.

Les guides optiques 6 sont disposés, et maintenus en position au moins par les premiers éléments structurels 14, de manière à se trouver en série transversale, dans un agencement en éventail. On entend par agencement en éventail des guides du dispositif un agencement dans lequel les extrémités distales 18 respectives des guides optiques, porteuses des faces de sortie 22 de la lumière, sont collées les unes contre les autres et dans lequel les extrémités proximales 16 respectives, porteuses des faces d'entrée 20 de la lumière en regard des sources de lumières, sont espacées transversalement l'une de l'autre. Les extrémités proximales doivent être espacées, aussi bien pour que la lumière émise par une source de lumière vers un guide optique ne pénètre pas dans le guide optique voisin, que pour limiter l'échauffement mutuel des sources de lumière voisines, et les extrémités distales 18 des guides doivent être collées successivement les unes aux autres pour éviter les zones sombres entre les segments de lumière formés par les guides et projetés vers le dispositif de projection en sortie du module. Tel que cela est illustré, il est avantageux que les extrémités distales 18 des guides optiques 6 soient plaquées l'une contre l'autre sur une distance déterminée, qui peut être d'environ 1 mm à titre d'exemple, pour former une portion de recouvrement des segments lumineux et s'assurer un éclairage continu lorsque tous les segments sont allumés.

Tel que cela a été précisé, le dispositif lumineux est formé de deux sous-ensembles distincts que l'on vient assembler l'un contre l'autre et que l'on lie au moins partiellement par une pièce de matière souple.

Le premier sous-ensemble 2, illustré sur la figure 1, comporte ici trois guides optiques disposés en série transversale et espacés les uns des autres, ainsi que des éléments structurels raccordant les extrémités proximales correspondantes de ces guides. Le premier sous-ensemble porte ici le guide central 8 et les guides latéraux 12, espacés du guide central à leur extrémité distale 18 d'une distance sensiblement égale à la largeur du guide intermédiaire 10 amené à venir se placer entre eux par assemblage des deux sous-ensembles, et une première partie 30 des premiers éléments structurels est disposée transversalement au sous-ensemble, en reliant successivement chacune des extrémités proximales 16 des guides optiques.

Le deuxième sous-ensemble 4, visible sur la figure 2, comporte ici deux guides optiques disposés en série transversale et espacés l'un de l'autre, ainsi qu'un élément structurel raccordant l'une des extrémités de chacun des guides. Le deuxième sous-ensemble porte ici les guides intermédiaires 10 espacés l'un de l'autre à leur extrémité distale 18 d'une distance sensiblement égale à la largeur du guide central 8 amené à venir se placer entre eux par assemblage des deux sous-ensembles.

Le deuxième sous-ensemble comporte une deuxième partie 40 des premiers éléments structurels formée par des moyens femelles/mâles complémentaires des moyens mâles/femelles formant la première partie 30 des premiers éléments structurels.

Chacun des sous-ensembles est réalisé individuellement par moulage et la forme de ces sous-ensembles, et l'espacement prévu entre chaque guide optique voisin d'un même sous-ensemble, permet un démoulage facile. Les deux sous-ensembles sont ensuite montés l'un par rapport à l'autre, par coopération de la première partie 30 et de la deuxième partie 40 des premiers éléments structurels. Dans cette position de pré-assemblage, illustrée sur la figure 3, les guides sont ici pré-maintenus les uns par rapport aux autres, avec leur extrémité distale sensiblement au contact de l'extrémité distale du guide voisin, et leur extrémité proximale espacée de l'extrémité proximale du guide voisin.

Deux cas de figure peuvent apparaître lors de ce pré-assemblage. Deux guides successifs du dispositif lumineux peuvent présenter des faces de sortie décalées longitudinalement l'une de l'autre, et deux guides successifs peuvent ne pas être parfaitement au contact l'un de l'autre au niveau de leur extrémité distale. Ceci est notamment du au fait des tolérances de fabrication des deux sous-ensembles.

Dans une étape ultérieure du procédé d'obtention du dispositif lumineux selon l'invention, on plaque les deux sous-ensembles liés l'un à l'autre contre une pièce de matière souple 5, en appliquant les extrémités distales des guides contre cette pièce 5, tel qu'illustré sur la figure 3 par le sens de la flèche F. On comprend que l'on pourrait sans sortir du contexte de l'invention procéder autrement pour rendre solidaire les extrémités des guides et la pièce de matière souple, et notamment par surmoulage de la pièce sur les guides. La pièce de matière souple 5 présente une dimension selon l'axe transversal suffisamment grande pour venir en recouvrement de l'ensemble des guides successifs, mais il sera compris que l'on pourrait prévoir une pièce de matière souple 5 venant en recouvrement uniquement de deux guides optiques successifs. L'agencement de la matière souple et de l'extrémité des guides noyée dans cette matière souple est telle que la matière souple garantit une bonne tenue mécanique de l'ensemble.

Dans une variante de réalisation, on pourra prévoir un moyen de maintien en position de la pièce de matière souple, relié mécaniquement à au moins une partie des premiers éléments structurels 14. Avantageusement, le moyen de maintien consiste en une plaque translucide ou transparente de sorte qu'elle peut s'étendre en aval de la pièce de matière souple par rapport au trajet des rayons lumineux sans gêner la propagation de ceux-ci.

La pièce de matière souple 5 est avantageusement réalisée en silicone transparent, par exemple de la famille des élastomères silicones liquides (connu sous l'acronyme anglais LSR pour « Liquid Silicon Rubber »). On comprend qu'il importe que le matériau choisi pour la pièce 5, qui doit se déformer sous l'effet de la pression des guides optiques 6, doit être plus souple que celui choisi pour les guides optiques. De préférence l'indice optique de la matière composant la pièce de matière souple 5 est sensiblement voisin, voire identique, de celui de la matière composant les guides.

Sous l'effet de la pression exercée, la face d'entrée 41 de la pièce de matière souple 5, qui est en contact avec les guides, se déforme et la matière souple vient se loger entre les extrémités distales des guides si celles-ci ne sont pas parfaitement collées les unes contre les autres. Par ailleurs, l'ensemble des guides est poussé contre la pièce de matière souple 5 au moins jusqu'à ce que le guide optique le plus court dans la dimension longitudinale soit au contact de la face d'entrée 41 de la pièce de matière souple. On assure ainsi une continuité pour la propagation des rayons lumineux. La face de sortie 42 de la pièce de matière souple, disposée à l'opposé de la face d'entrée 41, n'est pas déformée par la pression exercée par les guides du fait de l'épaisseur de la matière souple 5 et elle forme une face de sortie commune à l'ensemble des guides.

Les rayons lumineux, émis par les sources lumineuses et pénétrants dans les guides optiques par leur face d'entrée respective, sont réfléchis dans chaque guide optique jusqu'à la face de sortie commune 42 de la pièce de matière souple, les rayons déviés par un guide optique pouvant se croiser avec les rayons déviés par le guide optique voisin au niveau de la pièce de matière souple 5. On s'assure ainsi un faisceau lumineux homogène quand toutes les sources sont allumées, sans création de zone d'ombre entre deux segments du faisceau. Par ailleurs, le rôle de cette pièce de matière souple est également de lier les guides optiques entre eux au niveau de leur extrémité distale sans qu'il soit nécessaire de prévoir des tolérances de fabrication très faibles et donc très couteuses. La pièce de matière souple 5 a donc pour rôle d'absorber, dans les trois dimensions, le décalage de positionnement de guides successifs par rapport à une position théorique dans laquelle les extrémités distales sont au contact sur une distance donnée et sont alignées pour former un plan régulier de sortie de la lumière, et de proposer une surface de sortie de la lumière qui soit plane pour faciliter sa mise en position dans une zone focale d'un système de projection. La face de sortie commune 42 à chacun des guides est sensiblement plane, non déformée, tandis que la face d'entrée 41 de la pièce de matière souple est déformée en fonction des défauts de fabrication et/ou des jeux de montage laissés entre les guides optiques 6.

Le dispositif, créé par l'assemblage des deux sous-ensembles et par la superposition d'une couche de matière souple en recouvrement de l'extrémité distale des guides, peut ensuite être fixé dans le module lumineux par un support de fixation qui présente une forme de platine transversale comportant deux montants transversaux sur lesquels viennent reposer les guides et deux pattes de fixation latérales, aptes à être rapportées sur la structure du module et assurer la mise en place du dispositif à l'emplacement souhaité dans le module.

On a illustré sur la figure 5 un module lumineux dans lequel le dispositif lumineux que l'on vient de décrire est implanté. Le module est un module dit bifonction, c'est-à-dire un module dans lequel deux sous-modules 44, 46 sont agencés l'un contre l'autre pour réaliser de façon complémentaire une fonction de " feux de route " et une fonction de " feux de croisement ", par projection de faisceaux lumineux vers un dispositif optique de projection 48, de type lentille, disposé en sortie du module.

Le module s'inscrit dans un système d'éclairage qui comporte également des moyens de commande pour allumer, éteindre ou modifier la puissance lumineuse émise par chaque source de lumière de chaque module. Ces moyens de commande pourront être propre à chaque module ou consister en des moyens de commande uniques, dès lors que le pilotage de chaque source de lumière du système peut être simultané. Le système d'éclairage comporte en outre un module de détection sur la route d'un corps à ne pas éblouir. Ce module de détection consiste par exemple en une caméra tournée vers la scène de route s'étendant devant le véhicule, et en des moyens de traitement d'image associés, qui permettent l'élaboration d'une information de détection que le module de détection est apte à envoyer aux moyens de commande pour l'allumage, l'extinction ou la modification de la puissance lumineuse émise par chaque source de lumière en fonction de cette information de détection.

Il est particulièrement intéressant de proposer un système d'éclairage comprenant au moins deux modules d'éclairage tel qu'ils peuvent être décrits ici. Ces modules sont répartis de sorte qu'au moins un des modules est disposé dans un projecteur gauche du véhicule, et qu'au moins un des modules est disposé dans le projecteur droit correspondant. Dans chaque projecteur, il pourra être prévu une pluralité de modules d'éclairage. Les modules sont agencés les uns par rapport aux autres que ce soit au sein d'un même projecteur, ou entre les deux projecteurs, de manière à ce qu'au moins une partie de faisceau, par exemple un segment, réalisée par l'un des modules recouvre au moins une partie de faisceau, dans l'exemple un segment, réalisée par un autre des modules.

Dans au moins un module de chaque projecteur formé de deux sous-modules, le premier sous-module est agencé pour réaliser un premier faisceau à coupure, pour réaliser la fonction " feux de croisement ", et le deuxième sous-module est agencé pour réaliser un deuxième faisceau complémentaire du premier faisceau pour que ces deux faisceaux superposés réalisent ensemble la fonction " feux de route ". On entend par faisceau complémentaire un faisceau qui forme avec le faisceau réalisé par le premier sous-module un faisceau cohérent lorsque les deux sous-modules sont pilotés pour réaliser simultanément l'émission du faisceau lumineux qui leur est propre.

Le module comporte un cache 50, par exemple revêtu d'un revêtement réfléchissant pour former une plieuse, et une plaque de support 52 qui s'étendent sensiblement dans le plan médian du module, entre les deux sous-modules, le cache s'étendant notamment sur le trajet des rayons réfléchis par le premier sous-module 44 pour permettre de façon connue la coupure du premier faisceau tandis que la plaque de support porte les deux sous-modules et leur(s) source(s) de lumière respective(s) ainsi qu'un moyen de refroidissement, ici non représenté, de l'ensemble. Le cache 50 présente un bord de coupure 56 qui présente un profil courbe, notamment en présentant un plan incliné, par exemple une forme de marche sensiblement au centre du bord de coupure. La zone centrale de réflexion est ainsi composée de deux parties distinctes en décalage verticale l'une par rapport à l'autre, un plan incliné, par exemple de 15° ou de 45°, les reliant pour former ladite marche. D'autres types de profil peuvent être prévus, comme par exemple un profil sans marche.

Le faisceau complémentaire du deuxième sous-module est un faisceau sélectif permettant la réalisation d'une fonction de feux de route non éblouissant, avec un faisceau partagé en plusieurs portions, qui peuvent être allumées ou éteintes sélectivement selon les instructions de commande des sources lumineuses associées au deuxième sous-module. La fonction d'éclairage réalisée par chaque portion de faisceau peut être éteinte ou atténuée pour former une zone de non éblouissement d'un conducteur de véhicule détecté dans la scène de route en amont du véhicule, tout en permettant de conserver de bonnes conditions d'éclairage du reste de la scène de route.

Le deuxième sous-module 46 comporte notamment d'une part une pluralité de sources lumineuses activables sélectivement pour émettre, simultanément ou alternativement, des rayons lumineux, et d'autre part le dispositif lumineux 1 décrit précédemment et composé d'une pluralité de guides optiques 6. Le dispositif et les diodes sont positionnés l'un par rapport aux autres, de manière à ce que chaque source soit apte à coopérer avec l'un des guides optiques pour former des images de ces sources au niveau d'une zone focale, notamment une surface focale courbée P du dispositif optique de projection, afin que ces images puissent être projetées par le dispositif de projection en sortie du module. Chaque portion de faisceau est obtenue par la coopération d'une source lumineuse et d'un guide optique associé et ces portions de faisceau prennent ici la forme de bandes droites rectilignes correspondant aux formes des faces de sortie des guides optiques du dispositif lumineux.

Le dispositif lumineux selon l'invention est agencé dans le deuxième sous-module. Les faces de sortie des guides optiques sont tournées vers la lentille 48 et les faces d'entrée sont tournées vers un élément de structure sur lequel sont rapportées les sources lumineuses pour que celles-ci soient en regard de la face d'entrée du guide correspondant. Par ailleurs, la face de réflexion est tournée à l'opposé du cache tandis que la face avant est tournée vers le cache. Le dispositif est agencé dans le module de sorte que les guides optiques sont en contact avec le cache, uniquement au voisinage de la surface focale courbée Pf de la lentille. C'est la pièce de matière souple 5 disposée en recouvrement de l'extrémité distale 18 de chaque guide optique 6 qui est au contact du cache 50, la ligne de contact entre la pièce de matière souple 5 et le cache 50 étant dans la surface focale Pf de la lentille. Dans cet agencement, la pièce de matière souple permet d'assurer un contact suffisant entre les guides et le cache pour garantir, outre la bonne tenue mécanique de l'ensemble tel que cela a pu être précisé précédemment, l'absence d'inhomogénéité entre le faisceau code et le faisceau route : le premier sous-module, disposé d'un côté du cache permet de réaliser le faisceau code, ou faisceau à coupure, et le deuxième sous-module, disposé de l'autre côté du cache, permet de réaliser un deuxième faisceau complémentaire du faisceau code pour qu'ils réalisent ensemble le faisceau route. La présence de la matière souple au contact du cache permet de lisser les différences d'éclairage qui pourraient exister dans la zone de jonction des deux faisceaux complémentaires.

Cet agencement et la forme sensiblement elliptique de la face de réflexion de chaque guide, qui tel que cela a été décrit précédemment permet que les rayons lumineux sortent du guide au sommet de la face de sortie, assurent qu'une partie de ces rayons atteint directement la lentille en partie supérieure tandis qu'une autre partie est réfléchie par une face inférieure du cache pour atteindre la lentille en partie inférieure.

Par ailleurs, le fait que ce soit la pièce de matière souple qui soit au contact du cache et que la face de sortie 42 soit disposée dans la surface focale Pf permet d'assurer le fait que les zones de recouvrement des images, formées au moins par l'épaisseur de la pièce de matière souple, sont disposées en amont de la surface focale de la lentille, ce qui permet de projeter un faisceau complémentaire dont les différentes portions sont lissées pour éviter un découpage vertical, dans le cas d'une segmentation du faisceau, trop net.

Les sources de lumière consistent chacune en une source à semiconducteurs, et par exemple une puce de diode électroluminescente fixée sur une carte de circuits imprimés, ou directement rapportée sur des éléments structurels du dispositif. Les sources lumineuses sont disposées en série transversale, avec un écart entre chaque source, qui peut être avantageusement compris entre 5 et 10mm et qui est sensiblement égal à l'écartement transversal entre deux faces d'entrée de guide optique successives du dispositif lumineux, de manière à ce que chaque guide soit bien disposé en regard d'une de ces sources lumineuses.

La série de guides optiques du dispositif est centrée transversalement dans le module, de manière à ce que le guide optique central 8 et le bord supérieur de son extrémité distale 18 coopère avec le plan incliné du cache. De la sorte, les guides optiques intermédiaires 10 et latéraux 12 s'étendent transversalement de part et d'autre de ce plan incliné du cache. Etant entendu que le véhicule comporte deux projecteurs, un à gauche et un à droite, la superposition des deux faisceaux gauche et droit donne un faisceau route complémentaire complet dans lequel chaque segment du faisceau route peut être soit fortement éclairé par l'éclairage des deux segments correspondants des faisceaux gauche et droit, soit partiellement éclairé par l'éclairage du segment d'un des faisceaux ou par l'éclairage du segment de l'autre faisceau, soit éteint complètement. Par ailleurs, il est intéressant de noter que selon l'invention, un dispositif lumineux peut selon l'invention être implanté indifféremment dans le module d'un projecteur gauche ou dans le module d'un projecteur droit, ce qui simplifie le montage des projecteurs.

Dans l'exemple illustré, on dénombre cinq sources lumineuses pour autant de guides optiques, mais on comprendra que le nombre peut être différent et non forcément impair dans ce cas, dès lors que le dispositif lumineux est réalisé par deux sous-ensembles de guides que l'on vient disposer les uns entre les autres et que l'on cherche à solidariser à une de leur extrémité par la présence d'une pièce rapportée en matière souple.

On va maintenant décrire un deuxième mode de réalisation, en se référant notamment aux figures 6 à 8, dans lequel la structure des sous-ensembles diffère du premier mode de réalisation en ce que le premier sous-ensemble 2 porte des deuxièmes éléments structurels 58 qui permettent la tenue d'au moins certains des guides optiques entre eux au niveau de l'extrémité distale.

Ces deuxièmes éléments structurels présentent la forme de deux plaques disposées de part et d'autre du guide central 8 en prolongeant transversalement l'extrémité distale 18 du guide central pour venir en recouvrement des faces de sortie 22 des guides optiques latéraux 12. Les plaques forment ainsi une bande 60 réalisée en matière translucide ou transparente et disposée transversalement, en aval desdites extrémités distales 18 sur le trajet des rayons lumineux.

Tel qu'illustré sur la figure 6, la bande 60 et deux guides optiques successifs du premier sous-ensemble 2 définissent un logement de réception 62 de dimensions adaptées à loger une extrémité distale 18 d'un guide d'un deuxième sous-ensemble 4, étant entendu que lorsque les deux sous-ensembles sont assemblés, la face de sortie 22 du guide du deuxième sous-ensemble 4 doit venir en regard de ladite bande 60.

Une pièce de matière souple 5 est disposée dans le logement de réception, pour prendre place entre la face de sortie 22 et la bande 60 et/ou pour prendre place entre les faces latérales 27 des guides définissant le logement 62 et le guide du deuxième sous-ensemble 4 venant s'insérer dans le logement 62. La pièce de matière souple 5 peut être surmoulée sur l'extrémité distale 18 du guide dudit deuxième sous-ensemble 4 (figure 7) de manière à prolonger sensiblement dans la direction longitudinale ledit guide, ou bien elle peut être disposée dans le logement 62, aussi bien sur la bande 60 que sur les faces des guides successifs du premier sous-ensemble 2, pour être déformée lors de l'insertion du guide du deuxième sous-ensemble 4 (figure 8). Dans les deux cas, la matière souple permet de combler l'espace pouvant se former entre deux guides successifs du dispositif lorsque les sous-ensembles sont assemblés, ou entre l'extrémité distale d'un guide et la bande formant les deuxièmes éléments structurels.

La description qui précède explique clairement comment l'invention permet d'atteindre les objectifs qu'elle s'est fixés et notamment de proposer un dispositif lumineux qui facilite la conception et la fabrication d'une pluralité de guides optiques ainsi que leur mise en place dans un module en regard de sources lumineuses pour le guidage de rayons lumineux et la création d'un faisceau adaptatif.

Le dispositif est particulièrement facile à obtenir par moulage, du fait de la conception en deux sous-ensembles dans chacun desquels on prévoit des espaces importants laissés entre chaque guide optique. L'outillage et les moules correspondants sont ainsi plus faciles et moins onéreux à concevoir, et les pertes à la fabrication moins importantes. Et l'utilisation d'une pièce rapportée de matière souple, pour venir en recouvrement d'au moins une extrémité distale d'un des guides pour faire le liant avec au moins un guide voisin, permet d'envisager la conception de ces sous-ensembles en prévoyant des jeux de fonctionnement pour que l'assemblage des sous-ensembles ne nécessite pas de forcer pour insérer un guide d'un sous-ensemble entre deux guides d'un autre sous-ensemble, ce qui peut entraîner la détérioration d'un des guides.

Tel que cela a pu être précisé, la présence de la pièce de matière souple à l'extrémité des guides permet également de compenser les défauts d'alignement des faces de sortie des guides entre eux, pour proposer une face de sortie uniforme et sensiblement plane.

Il est particulièrement intéressant que cette pièce de matière souple soit disposée entre les faces de sortie des guides et le dispositif optique de projection, et qu'elle soit translucide ou transparente, pour former une face de sortie de la lumière sans discontinuités transversales qui sinon forment des ombres dans le faisceau projeté par la suite.

Bien entendu, diverses modifications peuvent être apportées par l'homme du métier à la structure du dispositif lumineux qui vient d'être décrite à titre d'exemple non limitatif, notamment dans le nombre des guides optiques et dans la forme des éléments structurels des sous-ensembles, dès lors que le dispositif lumineux comporte selon l'invention une pluralité de guides optiques portés par une pluralité de sous-ensembles et une pièce rapportée de matière souple pour lier entre eux au moins deux guides au niveau de leur extrémité distale. En tout état de cause, l'invention ne saurait se limiter au mode de réalisation spécifiquement décrit dans ce document, et s'étend en particulier à tous moyens équivalents et à toute combinaison techniquement opérante de ces moyens.

## Revendications

1. Dispositif lumineux (1) comportant une série de guides optiques (6) aptes à permettre chacun le guidage de rayons lumineux entre une face d'entrée (20) arrangée à une extrémité proximale (16) du guide optique, et une face de sortie (22),
**caractérisé en ce qu'**il est formé d'au moins deux sous-ensembles (2, 4) réalisés distinctement et comportant chacun au moins une partie de ladite série de guides optiques et des premiers éléments structurels (14) de tenue des guides en position reliant entre eux des guides optiques successifs dudit sous-ensemble, les deux sous-ensembles étant aptes à être assemblés pour former ledit dispositif,
et **caractérisé en ce que** les extrémités distales d'au moins deux guides optiques successifs de la série sont liées par une pièce de matière souple (5) translucide ou transparente.

2. Dispositif lumineux selon la revendication 1, **caractérisé en ce que** les guides optiques (6) sont disposés de sorte que l'extrémité distale respective (18), porteuse de la face de sortie, de deux guides voisins sont au contact l'une de l'autre et de sorte que l'extrémité proximale respective (16), porteuse de la face d'entrée (20), de ces deux guides voisins sont écartés transversalement l'une de l'autre.

3. Dispositif lumineux selon l'une des revendications précédentes, **caractérisé en ce que** l'extrémité distale (18) de chacun des guides optiques (6) est recouverte par la pièce de matière souple (5) qui forme une bande continue s'étendant en aval de toute la série des guides.

4. Dispositif lumineux selon la revendication 3, **caractérisé en ce que** la pièce de matière souple (5) présente une face continue qui s'étend à l'opposé des guides optiques (6) et qui forme une face de sortie commune (42) aux guides du dispositif lumineux.

5. Dispositif lumineux selon l'une des revendications précédentes, **caractérisé en ce que** la pièce de matière souple est disposée entre au moins deux extrémités distales (18) de deux guides optiques (6) successifs du dispositif.

6. Dispositif lumineux selon l'une des revendications précédentes, **caractérisé en ce qu'**au moins un premier sous-ensemble (2) comporte en outre un deuxième élément structurel (58), distinct du premier élément structurel (14) et apte à relier les extrémités distales (18) des guides optiques (6) de ce premier sous-ensemble.

7. Dispositif lumineux selon la revendication précédente, **caractérisé en ce que** le deuxième élément structurel (58) consiste en une bande réalisée en matière translucide ou transparente et disposée transversalement, en aval desdites extrémités distales (18) sur le trajet des rayons lumineux, ladite bande et deux guides successifs de ce premier sous-ensemble (2) définissant un logement de réception d'une extrémité distale (18) d'un guide d'un deuxième sous-ensemble (4) de sorte que la face de sortie de ce guide vienne en appui de ladite bande.

8. Dispositif lumineux selon la revendication précédente, **caractérisé en ce que** ladite pièce de matière souple (5) est disposée dans ledit logement de réception.

9. Dispositif lumineux selon la revendication 7, **caractérisé en ce que** ladite pièce de matière souple (5) est surmoulée sur le deuxième élément structurel (58) et sur la face des guides successifs du premier sous-ensemble (2) définissant ledit logement de réception.

10. Dispositif lumineux selon l'une des revendications précédentes, **caractérisé en ce que** la pièce de matière souple translucide ou transparente est réalisée dans un matériau présentant un indice de réfraction sensiblement voisin, voire identique, de celui du matériau des guides optiques.

11. Dispositif lumineux selon l'une des revendications précédentes, **caractérisé en ce que** la pièce de matière souple (5) est réalisée dans un matériau présentant une souplesse plus importante que la souplesse du matériau utilisé pour réaliser les guides optiques (6).

12. Module lumineux apte à être monté dans un projecteur de véhicule automobile, **caractérisé en ce qu'**il comporte des premiers moyens comportant un dispositif lumineux (1) selon l'une des revendications précédentes pour participer à la réalisation d'une pluralité de segments lumineux activables sélectivement.

13. Module lumineux pour l'éclairage et/ou la signalisation d'un véhicule automobile selon la revendication précédente, **caractérisé en ce que** ledit module comportant des deuxièmes moyens, agencés pour réaliser un premier faisceau à coupure dirigé vers un dispositif de projection agencé en sortie du module, les segments lumineux réalisés par les premiers moyens formant un deuxième faisceau dirigé vers le dispositif de projection et complémentaire au faisceau à coupure, lorsqu'ils sont activés simultanément.

14. Module lumineux selon la revendication précédente, **caractérisé en ce que** les deuxièmes moyens comportent au moins un moyen optique, au moins une source lumineuse disposée au niveau d'un foyer du moyen optique et un cache (50) disposé sur le trajet des rayons lumineux issus de la source lumineuse et déviés par le moyen optique pour la réalisation du faisceau à coupure, et **en ce que** les guides optiques (6) du dispositif lumineux (1) sont disposés de façon à être en contact avec le cache.

15. Module lumineux selon la revendication précédente, **caractérisé en ce que** les guides optiques (6) sont orientés de façon à être en contact avec le cache (50) uniquement au voisinage de la zone focale du dispositif de projection.

16. Module lumineux selon l'une des revendications 14 ou 15, **caractérisé en ce que** le contact avec le cache (50) est formé au niveau de la pièce de matière souple (5).

17. Système d'éclairage comprenant au moins un module lumineux selon l'une des revendications 12 à 16 et des moyens de commande pour allumer, éteindre ou modifier la puissance lumineuse émise par les premiers moyens et les deuxièmes moyens du module lumineux.
